Europäisches Patentamt

European Patent Office

Office européen des brevets

(19)

(11) EP 0 455 089 B1

(12) FASCICULE DE BREVET EUROPEEN

(45) Date de publication et mention
de la délivrance du brevet:
**04.03.1998 Bulletin 1998/10**

(51) Int Cl.6: **H04L 27/38**

(21) Numéro de dépôt: **91106455.8**

(22) Date de dépôt: **22.04.1991**

(54) **Procédé de récupération de porteuse pour modulation à grand nombre d'états de phase et d'amplitude**

Trägerrückgewinnungsverfahren für Modulation mit grosser Anzahl Phasen- und Amplitudenzustände

Carrier recovery method for modulation with a large number of phase/amplitude states

(84) Etats contractants désignés:
**CH DE ES FR GB IT LI NL SE**

(30) Priorité: **27.04.1990 FR 9005410**

(43) Date de publication de la demande:
**06.11.1991 Bulletin 1991/45**

(73) Titulaire: **ALCATEL ALSTHOM COMPAGNIE GENERALE D'ELECTRICITE**
**75008 Paris (FR)**

(72) Inventeurs:
 • **Isard, Marc**
  **F-78100 Saint Germain en Laye (FR)**
 • **Mostkowy, Christophe**
  **F-75015 Paris (FR)**

(74) Mandataire: **Smith, Bradford Lee et al**
**ALCATEL ALSTHOM,**
**Département de Propriété Industrielle,**
**30, avenue Kléber**
**75116 Paris (FR)**

(56) Documents cités:
**EP-A- 0 071 514        US-A- 4 771 438**

 • **IEEE International Symposium on Circuits and Systems 1988, Espoo, Finland, 7 - 9 juin 1988, Vol. 1 des 3, pages 599 - 602, M. H. W. Hoffman: "A New Carrier**
 • **Regeneration Scheme for QAM signals"**

**Description**

L'invention se rapporte à un procédé de récupération de porteuse pour modulation à grand nombre d'états et à un dispositif de mise en oeuvre de ce procédé.

Dans le domaine des faisceaux hertziens numériques les modems font appel à des modulations de plus en plus denses. Seule une démodulation cohérente peut être utilisée alors, car une démodulation différentielle se traduirait par un recul de seuil trop élevé dans le cas des modulations à grand nombre d'états. Une telle démodulation cohérente repose sur la fiabilité et la qualité de l'estimateur de phase de porteuse élaboré à la réception.

Au delà d'une modulation de phase 4 états (type MDP 4) on emploie des estimateurs échantillonnés. Ils reposent sur la disponibilité des échantillons des signaux démodulés, pris au débit symbolique et à l'instant d'ouverture maximale de l'oeil. Ces échantillons sont issus de convertisseurs analogique-numérique et permettent l'estimation des symboles émis ainsi qu'une évaluation de la distorsion associée.

Pour des raisons technologiques, la résolution de la grille de conversion-estimation était réduite jusqu'à présent aux bits d'information utiles définissant le symbole, et à un ou deux bits supplémentaires donnant la distorsion.

Un article de A. Leclert et P. Vandamme intitulé "Universal Carrier Recovery Loop for QASK and PSK signal sets" (Globecom'82 Conf. Rec., vol. 3, pp. 1228-1232, Nov. 29-Dec. 2, 1982, Miami, FL.) décrit une boucle de récupération de porteuse qui s'applique à des modulations de type QASK ("Quadrature Amplitude shift keying") et PSK ("Phase shift keying"). Cet article présente plusieurs systèmes de conversion estimation en QASK-16.

Sur de telles structures de régénération et d'estimation, désormais classiques, ont été batis les algorithmes du gradient simplifié, basés sur la connaissance du signe du signal reçu et du signe de la distorsion l'affectant. Cette famille d'estimateurs dirige les asservissements du régénérateur (porteuse, pointage, amplitude) ainsi que l'égaliseur temporel. L'estimateur de porteuse repose sur le calcul de l'effet de la voie X en phase sur la voie Y en quadrature, sgnX.sgneY, et de l'effet de la voie Y sur la voie X, sgnY.sgneX.

Mais un tel estimateur classique présente l'inconvénient de voir sa plage de monotonie réduite à la plage de validité de l'estimation de distorsion. Ceci signifie que le critère n'est valable que si la constellation démodulée présente une correspondance significative avec la grille d'estimation. Cette condition restreint les possibilités d'accrochage à de faibles niveaux de bruit et de distorsion.

Pour résoudre ce problème, l'invention a pour objet de proposer un critère robuste de récupération de porteuse, applicable aux modulations à grand nombre d'états, qui puisse s'accommoder de fortes distorsions ou de forts niveaux de bruit.

Elle propose à cet effet un procédé de récupération de porteuse conforme à la revendication 1.

Avantageusement le procédé de l'invention permet de ne pas dépendre de l'estimation de distorsion de chaque symbole, car cette estimation est trop facilement bruitée ou faussée par les distorsions linéaires ou non linéaires, et donc, devient dangereusement fragile pour les modulations à grand nombre d'états. Le procédé de l'invention ne s'appuie donc pas sur une grille de décision, mais propose un critère basé sur les propriétés géométriques de la constellation à démoduler. Le concept de ce type d'estimateur est cohérent avec l'introduction récente dans les régénérateurs de convertisseurs analogique-numérique à haute résolution (8 bits) pour réaliser du filtrage numérique.

L'invention concerne également un dispositif de récupération de porteuse conforme à la revendication 3.

Les caractéristiques et avantages de l'invention ressortiront d'ailleurs de la description qui va suivre, à titre d'exemple non limitatif, en référence aux figures annexées sur lesquelles :

- la figure 1 illustre la validité d'un estimateur de phase de l'art connu pour une rotation de phase de la constellation ;
- la figure 2 représente un dispositif de mise en oeuvre du procédé de l'invention ;
- la figure 3 donne le signe de l'estimateur de phase dans la constellation du signal reçu.

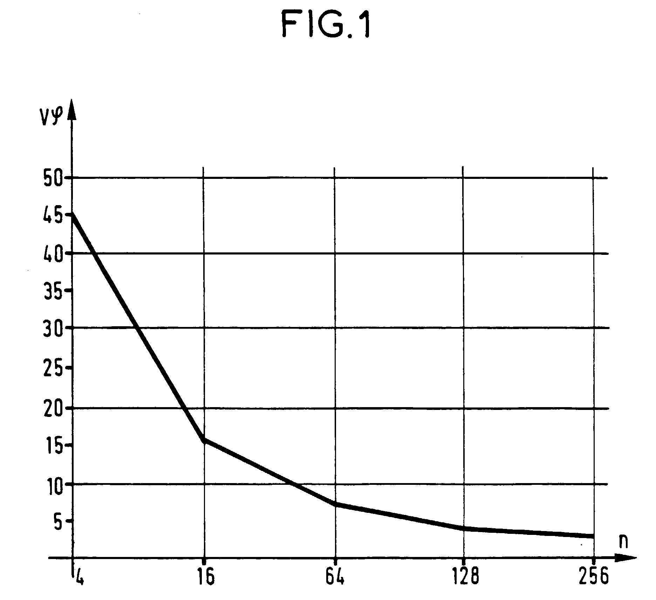

La figure 1 donne la courbe de validité de phase $V\varphi$ en fonction du nombre n d'états de modulation.

On voit sur cette courbe que, lorsque le nombre d'états de la modulation augmente, la plage de validité en phase de l'estimateur diminue : Ainsi au delà de la modulation MAQ 64, la plage de validité du critère de phase tombe en dessous de 10°.

Une modulation à $2^n$ états, qui est une modulation amplitude/phase, peut être décrite par une représentation de signaux, de type coordonnées dans un espace. On peut placer les états de façon équirépartie par rapport à des axes correspondant à des porteuses orthogonales X et Y. On obtient alors une constellation qui correspond à la représentation vectorielle des états de porteuse dont les projections sur les axes X et Y donnent les coordonnées de l'extrémité du vecteur représenté.

Dans le procédé de l'invention on effectue le calcul du barycentre de la constellation reçue dans chaque quadrant de la constellation XY. La position d'équilibre de ce barycentre se trouve donc sur les axes médians lorsque la porteuse est correctement accrochée. La position du barycentre renseigne directement sur la rotation de la constellation par rapport à la position d'accrochage.

Ce procédé ramène l'estimation de phase d'une modulation complexe au cas de la modulation à quatre états de phase ; il permet d'obtenir des performances semblables lors de l'acquisition.

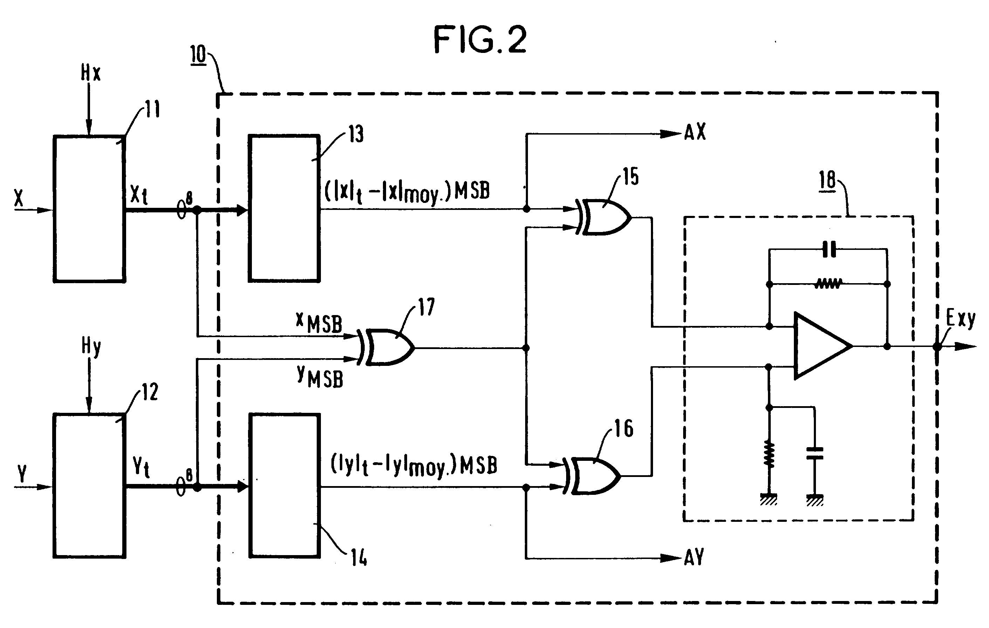

Le dispositif 10 de mise en oeuvre de ce procédé tel que représenté à la figure 2, comprend, en sortie des deux convertisseurs 11 et 12 analogique-numérique du régénérateur :

- deux circuits de calcul 13 et 14, par exemple des mémoires, permettant de connaitre l'écart entre le barycentre obtenu et le barycentre prévu, qui délivrent des signaux sgn (|x|t-x|moy) et sgn (|y|t-|y|moy) qui sont utilisés respectivement pour l'asservissement d'amplitude des voies X et Y, soient AX et AY représentés sur la figure 2 ;

- trois portes logiques 15, 16 et 17 de type "OU exclusif" recevant les bits de signe (ou bits de poids le plus fort ou "MSB") permettant d'obtenir respectivement les signaux $(x_{MSB} \oplus y_{MSB}) \oplus (|x|_t - |x|moy)_{MSB}$ et $(x_{MSB} \oplus y_{MSB}) \oplus (|y|_t - |y|moy)_{MSB}$ correspondant aux termes de l'équation 1 ci-dessous :

$$sgn\ [x(t)].sgn\ [y(t)].[sgn\ |x|(t) - |x|moy]$$

et

$$sgn\ [x(t)].sgn\ [y(t)].[sgn\ |y|\ (t) - |y|moy]$$

- un circuit intégrateur 18 permettant d'obtenir la différence de ces deux signaux qui est utilisé ensuite pour la récupération de porteuse.

Les récupérations de rythmes Hx et Hy permettent de retrouver le débit symbolique par détection des passages à zéro, et l'instant d'ouverture maximale de l'oeil, ou instant optimal d'échantillonnage. En sortie des convertisseurs analogiques-numériques du régénérateur, on obtient les échantillons des deux voies X en phase et Y en quadrature. On peut alors déterminer leur position par rapport aux barycentres |x|moy et |y|moy. Le calcul de |x|(t)-|x|moy et |y|(t)-|y|moy est effectué dans les deux mémoires, ROM ("Read Only Memory") par exemple. Les deux estimateurs ainsi créés permettent de piloter l'asservissement d'amplitude associé à chaque voie. Ce dispositif réalise ainsi un contrôle automatique du gain sur chaque voie X et Y, ce qui assure la validité de l'estimation du déplacement du barycentre. En effet, pour le premier quadrant, Ex=sgn (|x|(t)-|x|moy)et Ey = sgn (|y|(t)-|y|moy) définissent respectivement les signes des déviations du barycentre de la constellation par rapport à l'équilibre. Leur différence Ex-Ey donne l'estimateur de phase pour le premier quadrant. L'interprétation de la rotation de phase n'est valable que dans les parties du plan où (|x|-|x|moy).(|y|-|y|moy)<O ; car l'estimateur s'annule en dehors de ces zones. La généralisation aux quatre quadrants s'effectue en appliquant un opérateur repliant la constellation du signal reçu sur le premier quadrant ; soit en multipliant l'expression Ex-Ey par sgn[x(t)].sgn[y(t)]. L'estimateur ainsi réalisé s'écrit :

$$Exy=sgn[x(t)].sgn[y(t)].[sgn\ (|x|(t)-|x|moy)-$$

$$sgn(|y|(t)-|y|moy] \qquad (équation\ 1)$$

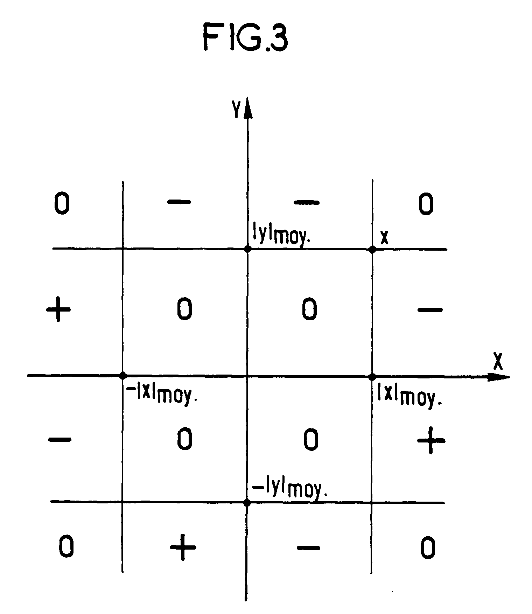

La figure 3 montre la valeur de cet estimateur dans la constellation du signal reçu.

Grâce au procédé de l'invention une constellation QAM 256 ("Quadrature Amplitude Modulation") même fortement bruitée reste correctement accrochée car le niveau de bruit est à comparer au poids du barycentre de la constellation dans un quadrant. L'estimateur autorise donc des rapports signal à bruit aussi faibles qu'en modulation 4 phases.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

**Revendications**

1. Procédé de récupération de porteuse pour modulation à grand nombre d'états de phase et d'amplitude, caractérisé en ce qu'il consiste à amener la constellation démodulée dans la plage de monotonie d'un estimateur classique avec une précision suffisante pour autoriser un fonctionnement autonome sur ce nouveau critère, en effectuant dans chacun des quatre quadrants du plan de régénération le calcul du barycentre de la constellation reçue.

2. Procédé selon la revendication 1, caractérisé en ce qu'il consiste à appliquer un opérateur mathématique pour replier ledit plan de régénération dans ledit premier quadrant.

3. Dispositif de récupération de porteuse pour modulation à grand nombre d'états de phase et d'amplitude, caractérisé en ce qu'il comprend :

- deux circuits (13, 14) de calcul d'écart entre le barycentre obtenu et le barycentre prévu de chacun des quatre quadrants de la constellation reçue, respectivement pour la voie X et la voie Y correspondant à deux porteuses orthogonales ;
- un circuit (15, 16, 17, 18) de calcul de l'estimation de phase pour lesdits quatre quadrants.

**4.** Dispositif selon la revendication 3, caractérisé en ce que lesdits circuits (13, 14) de calcul d'écart entre le barycentre obtenu et le barycentre prévu de chacun des quatre quadrants de la constellation reçue sont constitués par des mémoires ROM.

**5.** Dispositif selon l'une des revendications 3 et 4, caractérisé en ce que ledit circuit (15, 16, 17, 18) de calcul de l'estimation de phase pour lesdits quatre quadrants comprend un circuit (18) fournissant l'estimation de phase pour le premier quadrant, ainsi que trois portes logiques Ou-Exclusif (15, 16, 17) permettant d'appliquer un opérateur repliant ladite constellation reçue sur ledit premier quadrant et d'effectuer ainsi une généralisation auxdits quatre quadrants.

**Patentansprüche**

**1.** Verfahren zur Trägerrückgewinnung für Modulation mit einer große Anzahl von Phasen- und Amplitudenzuständen, dadurch gekennzeichnet, daß es darin besteht, die demodulierte Konstellation in den Monotoniebereich eines herkömmlichen Abschätzers mit einer ausreichenden Präzision zu bringen, um ein autonomes Funktionieren anhand dieses neuen Kriteriums zu ermöglichen, indem in jedem der vier Quadranten der Regenerationsebene die Berechnung des Schwerpunkts der empfangenen Konstellation durchgeführt wird.

**2.** Verfahren nach Anspruch 1, dadurch gekennzeichnet, daß es darin besteht, einen mathematischen Operator anzuwenden, um die Regenerationsebene in den ersten Quadranten umzuklappen.

**3.** Vorrichtung zur Trägerrückgewinnung für Modulation mit einer großen Anzahl von Phasen- und Amplitudenzuständen, dadurch gekennzeichnet, daß sie umfaßt:

- zwei Schaltungen (13, 14) zum Berechnen der Abweichung zwischen dem erhaltenen Schwerpunkt und dem vorgesehenen Schwerpunkt jedes der vier Quadranten der empfangenen Konstellation, jeweils für den X-Kanal und den Y-Kanal, die zwei orthogonalen Trägern entsprechen;

- eine Schaltung (15, 16, 17, 18) zum Berechnen der Phasenabschätzung für die vier Quadranten.

**4.** Vorrichtung nach Anspruch 3, dadurch gekennzeichnet, daß die Schaltungen (13, 14) zum Berechnen der Abweichung zwischen dem erhaltenen Schwerpunkt und dem vorgesehenen Schwerpunkt jedes der vier Quadranten der empfangenen Konstellation durch ROM-Speicher gebildet sind.

**5.** Vorrichtung nach einem der Ansprüche 3 und 4, dadurch gekennzeichnet, daß die Schaltung (15, 16, 17, 18) zum Berechnen der Phasenabschätzung für die vier Quadranten eine Schaltung (18), die die Abschätzung der Phase für den ersten Quadranten liefert, sowie drei logische Exklusiv-Oder-Gatter (15, 16, 17) umfaßt, die es gestatten, einen Operator anzuwenden, der die empfangene Konstellation auf den ersten Quadranten umklappt, und so eine Verallgemeinerung auf die vier Quadranten durchzuführen.

**Claims**

**1.** A method of recovering the carrier for modulation having a large number of phase and amplitude states, the method being characterized in that it consists in bringing the demodulated constellation to the monotonic range of a conventional estimator, with sufficient accuracy to enable autonomous operation on this new criterion, by calculating the center of gravity of the received constellation in each of the four quadrants of the regeneration plane.

**2.** A method according to claim 1, characterized in that it consists in applying a mathematical operator in order to fold said regeneration plane onto said first quadrant.

**3.** Apparatus for recovering the carrier for modulation having a large number of phase and amplitude states, characterized in that it comprises:

two circuits (13, 14) for calculating the difference between the center of gravity as obtained and the expected center of gravity of each of the four quadrants of the received constellation, respectively for the X channel and for the Y channel corresponding to two orthogonal carriers; and a circuit (15, 16, 17, 18) for calculating the phase estimate for said four quadrants.

**4.** Apparatus according to claim 3, characterized in that said circuits (13, 14), for calculating the difference between the center of gravity as obtained and the expected center of gravity of each of the four quadrants of the received constellation, are constituted by read only memories.

**5.** Apparatus according to claim 3 or 4, characterized in that said circuit (15, 16, 17, 18) for calculating and estimating phase for said four quadrants comprises a circuit (18) providing the phase estimation for the

**EP 0 455 089 B1**

first quadrant together with three exclusive-OR logic gates (15, 16, 17) for applying an operator that folds said received constellation onto said first quadrant, thereby generalizing to said four quadrants.

# FIG.1

# FIG.2

EP 0 455 089 B1

# FIG.3